# EUROPÄISCHE PATENTSCHRIFT

(11) **EP 2 789 819 B1**
(45) Veröffentlichungstag und Bekanntmachung des Hinweises auf die Patenterteilung: **09.11.2016**
(21) Anmeldenummer: 14163317.2
(22) Anmeldetag: 03.04.2014
(51) Int. Cl.: F01N 3/20, B60H 1/00, B60H 1/22, F15B 21/04

(54) **Heizvorrichtung**
Heating device
Dispositif de chauffage

(30) Priorität: 12.04.2013 DE 102013206589
(43) Veröffentlichungstag der Anmeldung: 15.10.2014
(73) Patentinhaber: Deere & Company, Moline, IL 61265 (US)
(72) Erfinder: Brisseau, Samuel, 68642 Bürstadt (DE)
(74) Vertreter: John Deere GmbH & Co. KG

(56) Entgegenhaltungen:
- EP-A1- 0 543 606
- EP-A2- 2 441 944
- WO-A1-2011/000852
- DE-A1-102007 042 836
- DE-A1-102008 006 630
- DE-A1-102009 009 538
- US-A1- 2010 038 162

## Beschreibung

Die Erfindung betrifft eine Heizvorrichtung für eine Harnstofflösung eines dieselkraftstoffbetriebenen Kraftfahrzeugs, mit einer von einer Klimatisierungseinrichtung des Kraftfahrzeugs umfassten Heizeinheit, die mittels eines abwärmeführenden Arbeitshydraulikstroms des Kraftfahrzeugs betreibbar ist.

Aufgrund der erhöhten Anforderungen an die Einhaltung gesetzlich vorgegebener Stickoxidemissionen gewinnt in dieselbetriebenen Kraftfahrzeugen die Abgasnachbehandlung mittels sogenannter SCR-Verfahren (SCR - Selective Catalytic Reduction) zunehmend an Bedeutung. Die Funktionsweise derartiger Abgasnachbehandlungsanlagen beruht hierbei auf der selektiven katalytischen Reduktion der Stickoxide mittels einer in den Abgasstrom eingespritzten wässrigen Harnstofflösung, die auch unter der Bezeichnung AdBlue bzw. DEF (DEF - Diesel Exhaust Fluid) bekannt ist. Der bei einer Temperatur von -11°C liegende Gefrierpunkt der Harnstofflösung sowie eine Zersetzungstemperatur im Bereich von +70°C stellen hierbei besondere Anforderungen an deren Mitführung im Kraftfahrzeug. Gängige Maßnahmen sehen daher eine Aufbewahrung der Harnstofflösung im Bereich einer Abgasanlage des Kraftfahrzeugs vor, deren Abwärme ein Gefrieren der Harnstofflösung während des Betriebs verhindern soll. Problematisch ist hierbei jedoch der Umstand, dass es aufgrund der unkontrollierten Wärmeeinwirkung seitens der Abgasanlage rasch zu einem unerwünschten Überhitzen der Harnstofflösung kommen kann.

Die EP 2 441 944 A2 beschreibt eine mobile Arbeitsmaschine mit einem Verbrennungsmotor und einem zusätzlichen hydraulischen Antrieb, dessen Hydraulikölkreislauf einen Wärmetauscher aufweisen kann, der in einem Wärmespeicher installiert ist und dessen Sekundärseite direkt mit dem Speichermedium des Wärmespeichers thermisch gekoppelt ist. Über die Sekundärseite des Wärmespeichers kann eine Vorheizung des SCR-Systems erfolgen.

Es ist daher Aufgabe der vorliegenden Erfindung, eine Heizvorrichtung für eine Harnstofflösung anzugeben, die es ermöglicht, einerseits einen Betrieb oberhalb des Gefrierpunkts sicherzustellen und zugleich ein unerwünschtes Überhitzen zu vermeiden.

Diese Aufgabe wird durch eine Heizvorrichtung mit den Merkmalen des Patentanspruchs 1 gelöst.

Die erfindungsgemäße Heizvorrichtung für eine Harnstofflösung eines dieselkraftstoffbetriebenen Kraftfahrzeugs weist eine von einer Klimatisierungseinrichtung des Kraftfahrzeugs umfasste Heizeinheit auf, die mittels eines abwärmeführenden Arbeitshydraulikstroms des Kraftfahrzeugs betreibbar ist. Ferner ist ein mittels des Arbeitshydraulikstroms temperierbarer Harnstofftank zur Aufnahme einer Harnstofflösung vorgesehen.

Erfindungsgemäß wird somit die in einem Arbeitshydraulikkreislauf des Kraftfahrzeugs beim Betrieb zugehöriger hydraulischer Fahrzeugaggregate anfallende sowie zum Zwecke einer Kabinenheizung genutzte Abwärme des Arbeitshydraulikstroms zugleich zur Temperierung der in dem Harnstofftank befindlichen Harnstofflösung herangezogen, wobei sich die Temperatur der Harnstofflösung durch kontrollierte Steuerung der von dem Arbeitshydraulikstrom abgegebenen Abwärme derart vorgeben lässt, dass diese den Gefrierpunkt während des Betriebs des Kraftfahrzeugs verlässlich übersteigt, ohne dass die Gefahr einer Überhitzung besteht. Die Steuerung der an die Harnstofflösung abgegebenen Abwärme erfolgt hierbei beispielsweise durch entsprechende Anpassung des zur Temperierung der Harnstofflösung herangezogenen Volumenanteils des Arbeitshydraulikstroms.

Vorteilhafte Weiterbildungen der erfindungsgemäßen Heizvorrichtung gehen aus den Unteransprüchen hervor.

Vorzugsweise ist ein zwischen einer ersten, zweiten und dritten Ventilstellung umschaltbares Steuerventil vorgesehen, wobei der Arbeitshydraulikstrom in der ersten Ventilstellung sowohl durch die Heizeinheit als auch durch einen zur Temperierung der Harnstofflösung vorgesehenen Wärmetauscher, in der zweiten Ventilstellung parallel durch die Heizeinheit und den Wärmetauscher, und in der dritten Ventilstellung ausschließlich durch die Heizeinheit hindurchgeführt wird. Auf diese Weise kann die an die Harnstofflösung abgegebene Abwärme durch entsprechendes Umschalten des Steuerventils ihrem tatsächlichen Heizbedarf angepasst werden, ohne dass die Heizleistung der insofern konkurrierenden Kabinenheizung unnötig beeinträchtigt wird. Hierbei ist der Umfang der an die Harnstofflösung abgegebenen Abwärme im Falle der ersten Ventilstellung am größten und im Falle der dritten Ventilstellung am geringsten. Grundsätzlich ist es ausreichend, wenn für die Harnstofflösung eine Temperatur knapp oberhalb des Gefrierpunkts eingehalten wird. Es ist daher denkbar, dass eine Kontrolleinheit das Steuerventil durch entsprechende Betätigung eines elektrischen Stellelements in die dritte Ventilstellung verbringt, wenn sich durch Auswertung einer mittels eines Temperatursensors erfassten Temperaturgröße ergibt, dass die momentane Temperatur der Harnstofflösung größer ist als ein für deren Gefrierpunkt charakteristischer Schwellenwert. Letzterer liegt im Falle gängiger Harnstofflösungen in der Größenordnung von -11 °C.

Des Weiteren kann vorgesehen sein, dass die Kontrolleinheit das Steuerventil durch entsprechende Betätigung des elektrischen Stellelements in die erste Ventilstellung verbringt, wenn sich durch Auswertung der mittels des Temperatursensors erfassten Temperaturgröße ergibt, dass die momentane Temperatur der Harnstofflösung kleiner oder gleich dem charakteristischen Schwellenwert ist, und die Kontrolleinheit zugleich auf einen erhöhten Heizbedarf von Seiten der Klimatisierungseinrichtung schließt. In diesem Fall wird die in dem Arbeitshydraulikstrom enthaltene Abwärme zunächst zum Zwecke der Kabinenheizung herangezogen und erst danach zur Temperierung der Harnstofflösung. Genauer gesagt werden Heizeinheit und Wärmetauscher seriell vom Arbeitshydraulikstrom durchflossen, sodass die im Arbeitshydraulikstrom nach Durchlaufen der Heizeinheit der Klimatisierungseinrichtung verbleibende Restwärme zum Temperieren der Harnstofflösung dient. Eine derartige Heizsituation kann beispielsweise dann eintreten, wenn im Falle eines Kaltstarts des Kraftfahrzeugs ein rasches Entfrosten der Windschutzscheibe erforderlich ist. Auf einen insofern bestehenden erhöhten Heizbedarf kann hierbei aufgrund einer entsprechenden Bedienelementbetätigung der Klimatisierungseinrichtung geschlossen werden.

Umgekehrt ist es möglich, dass die Kontrolleinheit das Steuerventil durch entsprechende Betätigung des elektrischen Stellelements in die zweite Ventilstellung verbringt, wenn sich durch Auswertung der mittels des Temperatursensors erfassten Temperaturgröße ergibt, dass die momentane Temperatur der Harnstofflösung kleiner oder gleich dem charakteristischen Schwellenwert ist, und die Kontrolleinheit zugleich auf einen verringerten oder durchschnittlichen Heizbedarf von Seiten der Klimatisierungseinrichtung schließt. Heizeinheit und Wärmetauscher werden hierbei parallel von dem erwärmten Arbeitshydraulikstrom durchflossen. Eine derartige Heizsituation liegt üblicherweise während des laufenden Betriebs des Kraftfahrzeugs vor und lässt sich anhand einer entsprechenden Bedienelementbetätigung bzw. fahrerseitigen Heizbedarfsanforderung der Klimatisierungseinrichtung erkennen.

Des Weiteren ist es möglich, dass das Steuerventil in Richtung der dritten Ventilstellung vorgespannt ist. Hierzu kann das Steuerventil einen federbelasteten Ventilschieber aufweisen, der in unbestromtem Zustand des elektrischen Stellelements in die dritte Ventilstellung gedrängt wird, sodass sich bei einem Ausfall der Stromversorgung oder einer Funktionsstörung der Kontrolleinheit ein mögliches Überhitzen der Harnstofflösung aufgrund einer übermäßigen Wärmezufuhr von Seiten des Arbeitshydraulikstroms verhindern lässt.

Um sicherzustellen, dass ein durch Zuführung des Arbeitshydraulikstroms initiierter Auftauvorgang beziehungsweise eine Temperierung zuerst in dem für die Versorgung einer Abgasnachbehandlungsanlage relevanten Entnahmebereich des Harnstofftanks beginnt, ist es von Vorteil, wenn der Wärmetauscher als entlang eines Ansaugstutzens des Harnstofftanks verlaufende Heizwendel ausgebildet ist. Zusätzlich kann sich die Heizwendel auch abschnittsweise entlang einer daran angeschlossenen und in Richtung der Abgasnachbehandlungsanlage verlaufenden Versorgungsleitung erstrecken.

Des Weiteren kann es bei extrem geringen Außentemperaturen sinnvoll sein, wenn zur raschen Temperierung der Harnstofflösung zusätzlich ein elektrisch betriebenes Heizsystem vorgesehen ist. Diese wird von der Kontrolleinheit beispielsweise dann eingeschaltet, wenn ein unterhalb des Gefrierpunkts der Harnstofflösung liegender weiterer Schwellenwert unterschritten wird.

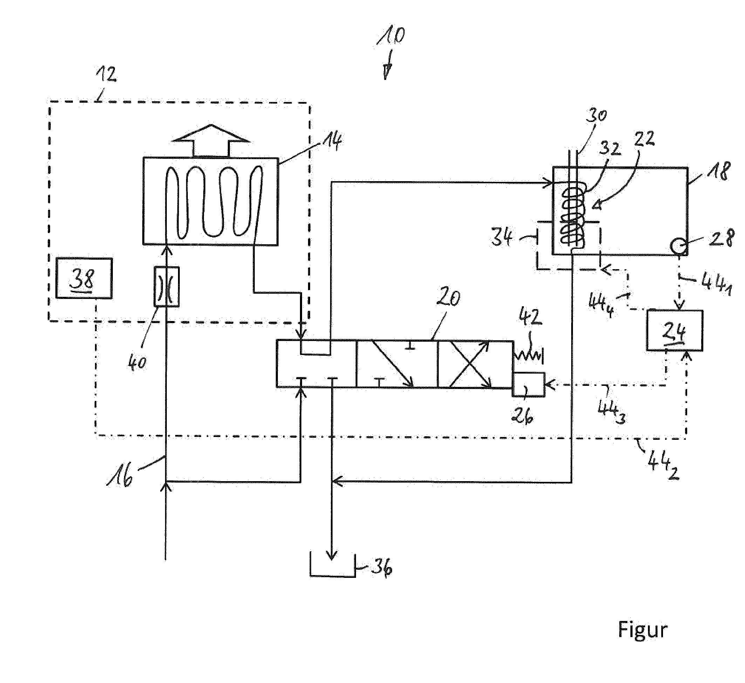

Die erfindungsgemäße Heizvorrichtung wird im Folgenden anhand der beigefügten Figur näher erläutert. Die Figur zeigt ein Ausführungsbeispiel der erfindungsgemäßen Heizvorrichtung für eine Harnstofflösung eines dieselkraftstoffbetriebenen Kraftfahrzeugs.

Gezeigt ist eine erfindungsgemäße Heizvorrichtung 10, die eine Heizeinheit 14 einer Klimatisierungseinrichtung 12, einen Harnstofftank 18, ein Steuerventil 20 und einen diese Komponenten durchströmenden Arbeitshydraulikstrom 16 umfasst. Innerhalb des Harnstofftanks 18 ist ein Wärmetauscher 22 vorgesehen, der im Wesentlichen aus einer von dem Arbeitshydraulikstrom 16 durchströmten Heizwendel 32 besteht. Die Heizwendel 32 umgibt, bevorzugt spiralförmig, einen Ansaugstutzen 30 für das in dem Harnstofftank 18 befindliche Medium. Der Ansaugstutzen 30 leitet das Medium in bekannter aber nicht näher dargestellter Weise zu einer Abgasnachbehandlungsanlage zur Zuführung in einen Abgasstrom.

Vorgesehen ist ferner eine elektronische Kontrolleinheit 24, die über eine Ansteuerung eines mit dem Steuerventil 20 funktional verbunden elektrischen Stellelements 26 eine Einnahme einer ersten, einer zweiten und einer dritten Ventilstellung des Steuerventils 20 bewirkt. Die Kontrolleinheit 24 ist zum Empfang von Zustandssignalen mit einem in dem Harnstofftank 18 angeordneten Temperatursensor 28 und einer Heizungssteuerung 38 der Klimatisierungseinrichtung 12 verbunden. Die Kontrolleinheit 24 ist mit dem Stellelement 26, dem Temperatursensor 28 und der Heizungssteuerung 38 über in der Figur strichpunktiert dargestellte Signalleitungen 44₁, 44₂, 44₃ verbunden. Dargestellt ist ferner ein Reservoir 36 zur Aufnahme des Hydrauliköls, wenn dieses nicht als Arbeitshydraulikstrom zirkuliert. Innerhalb der Klimatisierungseinrichtung 12 ist ein Drosselventil 40 vorgesehen.

Das Steuerventil 20 ist zwischen der ersten, der zweiten und der dritten Ventilstellung mittels des Stellelements 26 verstellbar, wobei die Figur das Steuerventil 20 in der ersten Ventilstellung befindlich darstellt. Ausgehend von der ersten Ventilstellung kann das Steuerventil 20 zunächst in die dritte Ventilstellung und von dort aus weiter in die zweite Ventilstellung bewegt werden. Somit entspricht die dritte Ventilstellung einer mittleren Stellung, wobei Federmittel 42 vorgesehen sind, die bei stromlosem beziehungsweise nicht angesteuertem Stellelement 26 das Steuerventil 20 zur Einnahme der dritten Ventilstellung beaufschlagen.

Wenn der Temperatursensor 28 über die Sensorleitung 44₁ der Kontrolleinheit eine momentane Temperaturgröße übermittelt, die größer ist als ein für den Gefrierpunkt des Mediums, vorliegend Harnstoff, charakteristischer Schwellenwert, erfolgt eine Ansteuerung des Steuerventils 20 hin zur Einnahme der dritten Ventilstellung. Der Arbeitshydraulikstrom 16 wird ausschließlich durch die Heizeinheit 14 hindurchgeführt. Der Durchfluss durch den Wärmetauscher 22 ist gesperrt. Ein charakteristischer Schwellenwert eines Gefrierpunktes liegt im Falle gängiger Harnstofflösungen in der Größenordnung von -11 °C.

Wenn der Temperatursensor 28 über die Sensorleitung 44₁ der Kontrolleinheit 24 eine momentane Temperaturgröße übermittelt, die kleiner ist als der charakteristische Schwellenwert und gleichzeitig die Kontrolleinheit 24 über die Sensorleitung 44₂ von der Heizungssteuerung 38 auf einen verringerten oder durchschnittlichen Heizbedarf Heizbedarf seitens der Klimatisierungseinrichtung 12 schließt, erfolgt eine Ansteuerung des Steuerventils 20 hin zur Einnahme der ersten Ventilstellung. In diesem Fall werden Heizeinheit 14 und Wärmetauscher 22 nacheinander von dem Arbeitshydraulikstrom 16 durchflossen, so dass die Restwärme nach dem Durchfließen der Heizeinheit 14 zur Temperierung des Mediums in dem Harnstofftank 18 genutzt wird.

Wenn der Temperatursensor 28 über die Sensorleitung 44₁ der Kontrolleinheit 24 eine momentane Temperaturgröße übermittelt, die kleiner ist als der charakteristische Schwellenwert und gleichzeitig die Kontrolleinheit 24 über die Sensorleitung 44₂ von der Heizungssteuerung 38 auf einen erhöhten Heizbedarf seitens der Klimatisierungseinrichtung 12 schließt, erfolgt eine Ansteuerung des Steuerventils 20 hin zur Einnahme der zweiten Ventilstellung. In diesem Fall werden Heizeinheit 14 und Wärmetauscher 22 gleichzeitig beziehungsweise parallel durchflossen, so dass ein entsprechend geringer Wärmeanteil auf die Klimatisierungseinrichtung 12 entfällt.

Optional kann ein elektrisches Heizungssystem 34 vorgesehen sein, wobei dieses von der Kontrolleinheit 24 über eine Sensorleitung 44₄ dann zugeschaltet wird, wenn aufgrund übermäßiger Minustemperaturen und einem Kaltstart des Kraftfahrzeugs eine übermäßig lange Zeit zum Auftauen des Medium in dem Harnstofftank 18 zu erwarten ist.

### Bezugszeichenliste

- 10: Heizvorrichtung
- 12: Klimatisierungseinrichtung
- 14: Heizeinheit
- 16: Arbeitshydraulikstrom
- 18: Harnstofftank
- 20: Steuerventil
- 22: Wärmetauscher
- 24: Kontrolleinheit
- 26: Stellelement
- 28: Temperatursensor
- 30: Ansaugstutzen
- 32: Heizwendel
- 34: elektrisches Heizsystem
- 36: Reservoir
- 38: Heizungssteuerung
- 40: Drosselventil
- 42: Federmittel
- 44₁- 44₄: Sensorleitung

## Patentansprüche

1. Heizvorrichtung (10) für eine Harnstofflösung eines dieselkraftstoffbetriebenen Kraftfahrzeugs, umfassend
eine von einer Klimatisierungseinrichtung (12) des Kraftfahrzeugs umfasste Heizeinheit (14), die mittels eines abwärmeführenden Arbeitshydraulikstroms (16) des Kraftfahrzeugs betreibbar ist und
ein mittels des Arbeitshydraulikstroms (16) temperierbarer Harnstofftank (18) zur Aufnahme einer Harnstofflösung, **dadurch gekennzeichnet,**
**dass** die Heizeinheit (14) und der Harnstofftank (18) von dem Arbeitshydraulikstrom (16) durchströmt sind.

2. Heizvorrichtung (10) nach Anspruch 1, **dadurch gekennzeichnet, dass** ein zwischen einer ersten, zweiten und dritten Ventilstellung umschaltbares Steuerventil (20) vorgesehen ist, wobei der Arbeitshydraulikstrom (16) in der ersten Ventilstellung zunächst durch die Heizeinheit (14) und danach durch einen zur Temperierung der Harnstofflösung vorgesehenen Wärmetauscher (22), in der zweiten Ventilstellung parallel durch die Heizeinheit (14) und den Wärmetauscher (22), und in der dritten Ventilstellung ausschließlich durch die Heizeinheit (14) hindurchgeführt wird.

3. Heizvorrichtung (10) nach Anspruch 2, **dadurch gekennzeichnet, dass** eine Kontrolleinheit (24) das Steuerventil (20) durch entsprechende Betätigung eines elektrischen Stellelements (26) in die dritte Ventilstellung verbringt, wenn sich durch Auswertung einer mittels eines Temperatursensors (28) erfassten Temperaturgröße ergibt, dass die momentane Temperatur der Harnstofflösung größer ist als ein für deren Gefrierpunkt charakteristischer Schwellenwert.

4. Heizvorrichtung (10) nach Anspruch 3, **dadurch gekennzeichnet, dass** die Kontrolleinheit (24) das Steuerventil (20) durch entsprechende Betätigung des elektrischen Stellelements (26) in die erste Ventilstellung verbringt, wenn sich durch Auswertung der mittels der Temperatursensors (28) erfassten Temperaturgröße ergibt, dass die momentane Temperatur der Harnstofflösung kleiner oder gleich dem charakteristischen Schwellenwert ist, und die Kontrolleinheit (24) zugleich auf einen erhöhten Heizbedarf von Seiten der Klimatisierungseinrichtung (12) schließt.

5. Heizvorrichtung (10) nach Anspruch 3 oder 4, **dadurch gekennzeichnet, dass** die Kontrolleinheit (24) das Steuerventil (20) durch entsprechende Betätigung des elektrischen Stellelements in die zweite Ventilstellung verbringt, wenn sich durch Auswertung der mittels des Temperatursensors (28) erfassten Temperaturgröße ergibt, dass die momentane Temperatur der Harnstofflösung kleiner oder gleich dem charakteristischen Schwellenwert ist, und die Kontrolleinheit (24) zugleich auf einen verringerten Heizbedarf von Seiten der Klimatisierungseinrichtung (12) schließt.

6. Heizvorrichtung (10) nach einem der Ansprüche 2 bis 5, **dadurch gekennzeichnet, dass** das Steuerventil (20) in Richtung der dritten Ventilstellung vorgespannt ist.

7. Heizvorrichtung (10) nach einem der Ansprüche 1 bis 6, **dadurch gekennzeichnet, dass** der Wärmetauscher (22) als innerhalb des Harnstofftanks (18) entlang eines Ansaugstutzens (30) verlaufende Heizwendel (32) ausgebildet ist.

8. Heizvorrichtung (10) nach einem der Ansprüche 1 bis 7, **dadurch gekennzeichnet, dass** zur Temperierung der Harnstofflösung ein zusätzliches elektrisch betriebenes Heizsystem (34) vorgesehen ist.

## Claims

1. Heating device (10) for a urea solution of a motor vehicle which is operated by diesel fuel, comprising
a heating unit (14) which is included in an air-conditioning device (12) of the motor vehicle and can be operated by means of a waste-heat-conducting working hydraulic flow (16) of the motor vehicle, and
a urea tank (18), whose temperature can be controlled by means of the working hydraulic flow (16), for holding a urea solution, **characterized**
**in that** the working hydraulic flow (16) flows through the heating unit (14) and the urea tank (18).

2. Heating device (10) according to Claim 1, **characterized in that** a control valve (20), which can switch between first, second and third valve positions, is provided, wherein, in the first valve position the working hydraulic flow (16) is initially carried through the heating unit (14) and then through a heat exchanger (22) provided for controlling the temperature of the urea solution, in the second valve position it is carried in parallel through the heating unit (14) and the heat exchanger (22), and in the third valve position it is carried exclusively through the heating unit (14).

3. Heating device (10) according to Claim 2, **characterized in that** a monitoring unit (24) moves the control valve (20) into the third valve position by correspondingly activating an electric actuator element (26) if it is found, by evaluating a temperature variable acquired by means of a temperature sensor (28), that the instantaneous temperature of the urea solution is higher than a threshold value which is characteristic of the freezing point thereof.

4. Heating device (10) according to Claim 3, **characterized in that** the monitoring unit (24) moves the control valve (20) into the first valve position by correspondingly activating the electric actuator element (26) if it is found, by evaluating the temperature variable acquired by means of the temperature sensor (28), that the instantaneous temperature of the urea solution is less than or equal to the characteristic threshold value, and the monitoring unit (24) simultaneously concludes that there is an increased heating demand on the part of the air-conditioning device (12).

5. Heating device (10) according to Claim 3 or 4, **characterized in that** the monitoring unit (24) moves the control valve (20) into the second valve position by correspondingly activating the electric actuator element if it is found, by evaluating the temperature variable acquired by means of the temperature sensor (28), that the instantaneous temperature of the urea solution is less than or equal to the characteristic threshold value, and the monitoring unit (24) simultaneously concludes that there is a reduced heating demand on the part of the air-conditioning device (12).

6. Heating device (10) according to one of Claims 2 to 5, **characterized in that** the control valve (20) is prestressed in the direction of the third valve position.

7. Heating device (10) according to one of Claims 1 to 6, **characterized in that** the heat exchanger (22) is embodied as a heating coil (32) running along an intake connector (30) within the urea tank (18).

8. Heating device (10) according to one of Claims 1 to 7, **characterized in that** an additional electrically operated heating system (34) is provided for controlling the temperature of the urea solution.

## Revendications

1. Dispositif de chauffage (10) pour une solution d'urée d'un véhicule fonctionnant au carburant diesel, comprenant
une unité de chauffage (14) comprise dans un système de climatisation (12) du véhicule automobile, laquelle peut fonctionner au moyen d'un courant hydraulique de travail (16) guidant la chaleur dissipée du véhicule automobile et
un réservoir à urée (18) destiné à accueillir une solution d'urée et qui peut être thermostatisé au moyen du courant hydraulique de travail (16), **caractérisé en ce**
**que** l'unité de chauffage (14) et le réservoir à urée (18) sont traversés par le courant hydraulique de travail (16).

2. Dispositif de chauffage (10) selon la revendication 1, **caractérisé en ce qu'**il existe une vanne de commande (20) qui peut être basculée entre une première, une deuxième et une troisième position de vanne, le courant hydraulique de travail (16), dans la première position de la vanne, passant tout d'abord à travers l'unité de chauffage (14) et ensuite à travers un échangeur de chaleur (22) conçu pour la thermostatisation de la solution d'urée, dans la deuxième position de la vanne, passant en parallèle à travers l'unité de chauffage (14) et l'échangeur de chaleur (22) et, dans la troisième position de vanne, passant exclusivement à travers l'unité de chauffage (14).

3. Dispositif de chauffage (10) selon la revendication 2, **caractérisé en ce qu'**une unité de contrôle (24) amène la vanne de commande (20) dans la troisième position de vanne par un actionnement en conséquence d'un élément de positionnement (26) électrique s'il résulte de l'interprétation d'une valeur de température détectée au moyen d'une sonde de température (28) que la température momentanée de la solution d'urée est supérieure à une valeur de seuil caractéristique pour son point de congélation.

4. Dispositif de chauffage (10) selon la revendication 3, **caractérisé en ce que** l'unité de contrôle (24) amène la vanne de commande (20) dans la première position de vanne par un actionnement en conséquence de l'élément de positionnement (26) électrique s'il résulte de l'interprétation de la valeur de température détectée au moyen de la sonde de température (28) que la température momentanée de la solution d'urée est inférieure ou égale à la valeur de seuil caractéristique, et l'unité de contrôle (24) conclut en même temps à un besoin en chauffage accru du côté du système de climatisation (12).

5. Dispositif de chauffage (10) selon la revendication 3 ou 4, **caractérisé en ce que** l'unité de contrôle (24) amène la vanne de commande (20) dans la deuxième position de vanne par un actionnement en conséquence de l'élément de positionnement électrique s'il résulte de l'interprétation de la valeur de température détectée au moyen de la sonde de température (28) que la température momentanée de la solution d'urée est inférieure ou égale à la valeur de seuil caractéristique, et l'unité de contrôle (24) conclut en même temps à un besoin en chauffage réduit du côté du système de climatisation (12).

6. Dispositif de chauffage (10) selon l'une des revendications 2 à 5, **caractérisé en ce que** la vanne de commande (20) est précontrainte en direction de la troisième position de vanne.

7. Dispositif de chauffage (10) selon l'une des revendications 1 à 6, **caractérisé en ce que** l'échangeur de chaleur (22) est configuré sous la forme d'un serpentin chauffant (32) qui s'étend à l'intérieur du réservoir à urée (18) le long d'un manchon d'aspiration (30).

8. Dispositif de chauffage (10) selon l'une des revendications 1 à 7, **caractérisé en ce qu'**il existe un système de chauffage (34) à fonctionnement électrique supplémentaire pour la thermostatisation de la solution d'urée.
